# EUROPÄISCHE PATENTANMELDUNG

(11) **EP 4 517 273 A1**
(43) Veröffentlichungstag der Anmeldung: **05.03.2025**
(21) Anmeldenummer: 23194583.3
(22) Anmeldetag: 31.08.2023
(51) Int. Cl.: G01D 11/24, G01D 21/00, G01L 19/14

(54) **MESSGERÄT MIT REDUZIERTER WÄRMELEITUNG**

(71) Anmelder: VEGA Grieshaber KG, 77709 Wolfach (DE)
(72) Erfinder: BAUR, Roland, 78126 Königsfeld (DE); LENK, Fritz, 77761 Schiltach (DE); MESSNER, Ulrich, 77830 Bühlertal (DE); OLSCHEWSKI, Florian, 77736 Zell am Harmersbach (DE); GRAMESPACHER, Pirmin, 77880 Sasbach (DE)
(74) Vertreter: Maiwald GmbH

(57) **Zusammenfassung**

Messgerät, eingerichtet zur Prozessautomatisierung im industriellen oder privaten Umfeld, aufweisend ein Messgerätegehäuse, eine Messsonde und eine Messgeräteelektronik, wobei das Messgerätegehäuse in dem Bereich zwischen der Messsonde und der Messgeräteelektronik eine Einschnürung aufweist, welche den Umfang des Messgerätegehäuses in dem Bereich der Einschnürung reduziert.

## Beschreibung

### Technisches Gebiet

Die vorliegende Offenbarung betrifft die Messgerätetechnik. Insbesondere betrifft die vorliegende Offenbarung ein Messgerät zur Prozessautomatisierung im industriellen oder privaten Umfeld.

### Technischer Hintergrund

Messgeräte zur Prozessautomatisierung im industriellen oder privaten Umfeld können im Bereich ihres Messkopfes erhöhten Temperaturen ausgesetzt sein. Um die Messgeräteelektronik vor diesen erhöhten Temperaturen zu schützen, weisen die Messgeräte eine gewisse Länge auf, welche für einen ausreichenden Abstand der Messgeräteelektronik und der Messsonde führt.

### Zusammenfassung

Es ist eine Aufgabe der vorliegenden Offenbarung, ein Messgerät bereitzustellen, welches sich durch eine kompakte Ausführung auszeichnet.

Diese Aufgabe wird durch Merkmale des unabhängigen Patentanspruchs gelöst. Weiterbildungen der vorliegenden Offenbarung ergeben sich aus den Unteransprüchen und der folgenden Beschreibung von Ausführungsformen.

Ein erster Aspekt der vorliegenden Offenbarung betrifft ein Messgerät, eingerichtet zur Prozessautomatisierung im industriellen oder privaten Umfeld. Das Messgerät weist ein Messgerätegehäuse, eine Messsonde und eine Messgeräteelektronik auf. Bei der Messsonde kann es sich beispielsweise um einen Anpasskegel und/oder ein Antennenhorn und/oder eine Linse handeln. Auch kann es sich um eine Druckmesszelle handeln, oder eine andere Messsonde.

Die Messsonde befindet sich in oder an dem dem Prozess zugewandten Bereich des Messgerätegehäuses und die Messgeräteelektronik befindet sich im Inneren des Messgerätegehäuses, und zwar vorzugsweise in dem Prozess abgewandten Bereich des Messgerätegehäuses, sodass der Abstand zwischen der Messsonde und der Messgeräteelektronik maximiert werden kann.

Das Messgerätegehäuse weist in dem Bereich zwischen der Messsonde und der Messgeräteelektronik eine Einschnürung auf, welche den Umfang des Messgerätegehäuses in dem Bereich der Einschnürung reduziert. In diesem Zusammenhang kann man auch von einer Taillierung oder Verjüngung sprechen.

Durch diese Einschnürung wird die Querschnittsfläche des Materials, aus dem das Messgerätegehäuse besteht, stark reduziert, sodass weniger Wärme von der Messsonde in Richtung der Messgeräteelektronik geleitet werden kann. Somit wird die Wärmeleitung effektiv reduziert. Auf diese Weise ist es möglich, die Baulänge des Gesamtgerätes so kurz wie möglich zu halten, ohne dabei die thermische Entkopplung zu verschlechtern.

Die Einschnürung des Messgerätegehäuses ist beispielsweise durch einen Drehprozess oder einen Fräsprozess hergestellt.

Gemäß einer Ausführungsform der vorliegenden Offenbarung ist die Einschnürung zumindest weitestgehend rotationssymmetrisch.

Gemäß einer weiteren Ausführungsform der vorliegenden Offenbarung weist die Einschnürung eine abgeschrägte Seitenfläche oder mehrere abgeschrägte Seitenflächen auf. Insbesondere beim Drehen können hierbei die Anforderungen an das Werkzeug verringert werden.

Gemäß einer weiteren Ausführungsform der vorliegenden Offenbarung beträgt die Querschnittsfläche des Messgerätegehäuses in dem Bereich der Einschnürung weniger als 10 % der Querschnittsfläche des dem Prozess zugewandten Bereichs des Messgerätegehäuses. Die Querschnittsfläche kann auch geringer ausfallen, wodurch die Wärmeleitfähigkeit weiter herabgesetzt wird.

Gemäß einer weiteren Ausführungsform der vorliegenden Offenbarung ist das Messgerätegehäuse einstückig ausgeführt.

Gemäß einer weiteren Ausführungsform der vorliegenden Offenbarung ist ein Rohr bzw. ein Rohrsegment vorgesehen, das über die Einschnürung geschoben ist. Vorzugsweise ist es dort an das Messgerätegehäuse angeschweißt. Das Rohr kann die mechanische Stabilität des Messgerätegehäuses maßgeblich vergrößern, sodass es auch stärkeren Vibrationen standhalten kann.

Gemäß einer weiteren Ausführungsform der vorliegenden Offenbarung besteht das Rohr und/oder das Messgerätegehäuse aus Metall, beispielsweise aus Aluminium oder Edelstahl.

Insbesondere kann vorgesehen sein, dass Rohr und Messgerätegehäuse aus demselben Material bestehen.

Gemäß einer weiteren Ausführungsform der vorliegenden Offenbarung handelt es sich bei dem Messgerät um ein Füllstandmessgerät.

Gemäß einer weiteren Ausführungsform der vorliegenden Offenbarung handelt es sich bei dem Messgerät um ein Druckmessgerät.

Gemäß einer weiteren Ausführungsform der vorliegenden Offenbarung handelt es sich bei dem Messgerät um ein Durchflussmessgerät.

Unter dem Begriff "Prozessautomatisierung im industriellen Umfeld" kann ein Teilgebiet der Technik verstanden werden, welches Maßnahmen zum Betrieb von Maschinen und Anlagen ohne Mitwirkung des Menschen beinhaltet. Ein Ziel der Prozessautomatisierung ist es, das Zusammenspiel einzelner Komponenten einer Werksanlage in den Bereichen Chemie, Lebensmittel, Pharma, Erdöl, Papier, Zement, Schifffahrt oder Bergbau zu automatisieren. Hierzu können eine Vielzahl an Sensoren eingesetzt werden, welche insbesondere an die spezifischen Anforderungen der Prozessindustrie, wie bspw. mechanische Stabilität, Unempfindlichkeit gegenüber Verschmutzung, extremen Temperaturen und extremen Drücken, angepasst sind. Messwerte dieser Sensoren werden üblicherweise an eine Leitwarte übermittelt, in welcher Prozessparameter wie Füllstand, Grenzstand, Durchfluss, Druck oder Dichte überwacht und Einstellungen für die gesamte Werksanlage manuell oder automatisiert verändert werden können.

Ein Teilgebiet der Prozessautomatisierung im industriellen Umfeld betrifft die Logistikautomation von Anlagen und die Logistikautomation von Lieferketten. Mit Hilfe von Distanz- und Winkelsensoren werden im Bereich der Logistikautomation Abläufe innerhalb oder außerhalb eines Gebäudes oder innerhalb einer einzelnen Logistikanlage automatisiert. Typische Anwendungen finden z.B. Systeme zur Logistikautomation im Bereich der Gepäck- und Frachtabfertigung an Flughäfen, im Bereich der Verkehrsüberwachung (Mautsysteme), im Handel, der Paketdistribution oder aber auch im Bereich der Gebäudesicherung (Zutrittskontrolle). Gemein ist den zuvor aufgezählten Beispielen, dass eine Präsenzerkennung in Kombination mit einer genauen Vermessung der Größe und der Lage eines Objektes von der jeweiligen Anwendungsseite gefordert wird. Hierfür können Sensoren auf Basis optischer Messverfahren mittels Laser, LED, 2D-Kameras oder 3D-Kameras, die nach dem Laufzeitprinzip (time of flight, ToF) Abstände erfassen, verwendet werden.

Ein weiteres Teilgebiet der Prozessautomatisierung im industriellen Umfeld betrifft die Fabrik-/Fertigungsautomation. Anwendungsfälle hierzu finden sich in den unterschiedlichsten Branchen wie Automobilherstellung, Nahrungsmittelherstellung, Pharmaindustrie oder allgemein im Bereich der Verpackung. Ziel der Fabrikautomation ist, die Herstellung von Gütern durch Maschinen, Fertigungslinien und/oder Roboter zu automatisieren, d. h. ohne Mitwirkung des Menschen ablaufen zu lassen. Die hierbei verwendeten Sensoren und spezifischen Anforderungen im Hinblick auf die Messgenauigkeit bei der Erfassung der Lage und Größe eines Objektes sind mit denen der im vorigen Beispiel der Logistikautomation vergleichbar.

Die in den Ansprüchen verwendeten Begriffe sollten so ausgelegt werden, dass sie die weitestmögliche vernünftige Interpretation in Übereinstimmung mit der vorstehenden Beschreibung erhalten. Zum Beispiel sollte die Verwendung des Artikels "ein" oder "der" bei der Einführung eines Elements nicht so ausgelegt werden, dass sie eine Vielzahl von Elementen ausschließt. Ebenso sollte die Erwähnung von "oder" so ausgelegt werden, dass sie eine Vielzahl von Elementen einschließt, so dass die Erwähnung von "A oder B" nicht "A und B" ausschließt, es sei denn, aus dem Kontext oder der vorangehenden Beschreibung geht klar hervor, dass nur eines von A und B gemeint ist. Ferner ist die Formulierung "mindestens eines von A, B und C" als eines oder mehrere Elemente aus einer Gruppe von Elementen zu verstehen, die aus A, B und C besteht, und nicht so auszulegen, dass mindestens eines von jedem der aufgeführten Elemente A, B und C erforderlich ist, unabhängig davon, ob A, B und C als Kategorien oder auf andere Weise miteinander verbunden sind. Darüber hinaus sollte die Erwähnung von "A, B und/oder C" oder "mindestens eines von A, B oder C" so ausgelegt werden, dass sie jede einzelne Einheit der aufgeführten Elemente, z. B. A, jede Teilmenge der aufgeführten Elemente, z. B. A und B, oder die gesamte Liste der Elemente A, B und C umfasst.

Im Folgenden werden unter Bezugnahme auf die Figuren weitere Ausführungsformen der vorliegenden Offenbarung beschrieben. Werden in den folgenden Figuren die gleichen Bezugszeichen verwendet, so bezeichnen diese gleiche oder ähnliche Elemente. Die Darstellungen in den Figuren sind schematisch und nicht maßstäblich.

### Kurze Beschreibung der Figuren

Fig. 1 zeigt ein Messgerät gemäß einer Ausführungsform der vorliegenden Offenbarung.
Fig. 2 zeigt ein Messgerät gemäß einer weiteren Ausführungsform der vorliegenden Offenbarung.
Fig. 3 zeigt ein Messgerät gemäß einer weiteren Ausführungsform der vorliegenden Offenbarung.
Fig. 4 zeigt ein Messgerät gemäß einer weiteren Ausführungsform der vorliegenden Offenbarung.

### Detaillierte Beschreibung von Ausführungsformen

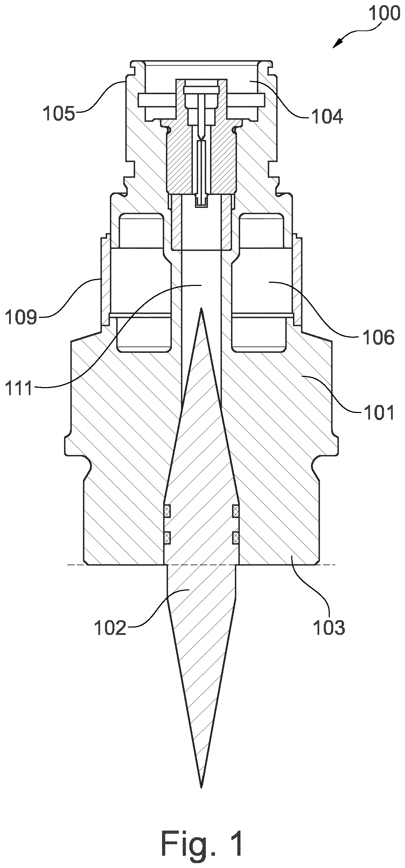

Fig. 1 zeigt ein Messgerät 100 gemäß einer ersten Ausführungsform der vorliegenden Offenbarung. Das Messgerät 100 weist ein Messgerätegehäuse 101 auf. In dem oder an dem dem Prozess zugewandten Bereich 103 des Messgerätegehäuses 101 befindet sich ein Teil 102 der Radarantenne, welches insbesondere das Eindringen von Schmutz, Staub oder Gasen in die Richtung der Elektronik verhindert. Dieses Teil kann als Anpasskegel ausgeführt eins. Alternativ oder zusätzlich kann ein Antennenhorn vorgesehen sein. Allgemein kann das Teil 102, ggf. zusammen mit dem Antennenhorn, als Messsonde 102 bezeichnet werden.

Am gegenüberliegenden Ende des Messgerätegehäuses 101, also dem dem Prozess abgewandten Bereich 105 befindet sich die Messgeräteelektronik 104, die im Inneren des Messgerätegehäuses 101 untergebracht ist. In dem Bereich dazwischen befindet sich eine Einschnürung 106, die beispielsweise durch einen Drehprozess des metallischen Messgerätegehäuses 101 hergestellt wurde. Typischerweise ist sie rotationssymmetrisch.

Entlang der Mittelachse des Messgerätegehäuses 101 befindet sich ein Wellenleiter oder Hohlleiter 111, der das Teil 102 der Messsonde mit der Messgeräteelektronik 104 verbindet, um das Messsignal von der Elektronik in Richtung des Teils 102 zu leiten und das reflektierte Empfangssignal von dem Teil 102 in Richtung Messgeräteelektronik 104.

Verschlossen wird die durch den Abtragungsprozess (Fräsen oder Drehen) erzeugte Tasche durch das rohrartige Element 109, welches von außen an das Messgerätegehäuse angeschweißt ist.

Fig. 1 zeigt somit eine Ausführungsform mit ausgedrehten "Taschen" und optimierter Schweißung. Durch die Einführung von "Taschen" (hierunter ist die durch Drehen oder Fräsen erzeugte Aussparung zu verstehen) im wärmeleitenden Bereich wird das wärmeleitende Material reduziert und gleichzeitig durch gut isolierende Luft ersetzt.

Zusätzlich entsteht durch die Erzeugung der Einschnürung aufgrund der Ausdünnung des Metalls des Gehäuses im äußeren Bereich ein Bereich, der sich besonders günstig auf die Schweißung des äußeren Rohrs 109 auswirkt, da bei der Schweißung wenig Material erwärmt werden muss.

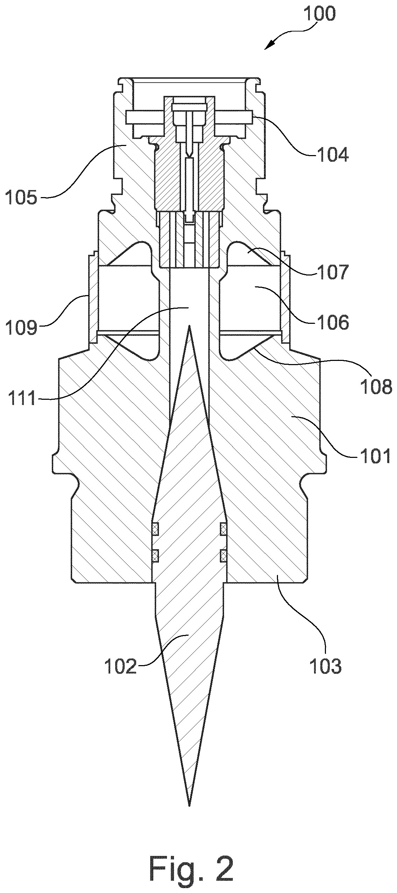

Eine Version mit schräg ausgedrehten Taschen erspart ein speziell geformtes Drehwerkzeug und spart so zusätzliche Kosten. Dies ist in Fig. 2 gezeigt. Insbesondere enthält die Aussparung 106 aufgrund der schrägen Seitenflächen 107, 108 keine Vorsprünge. Auch die abgerundeten Kanten verringern den Fertigungsaufwand.

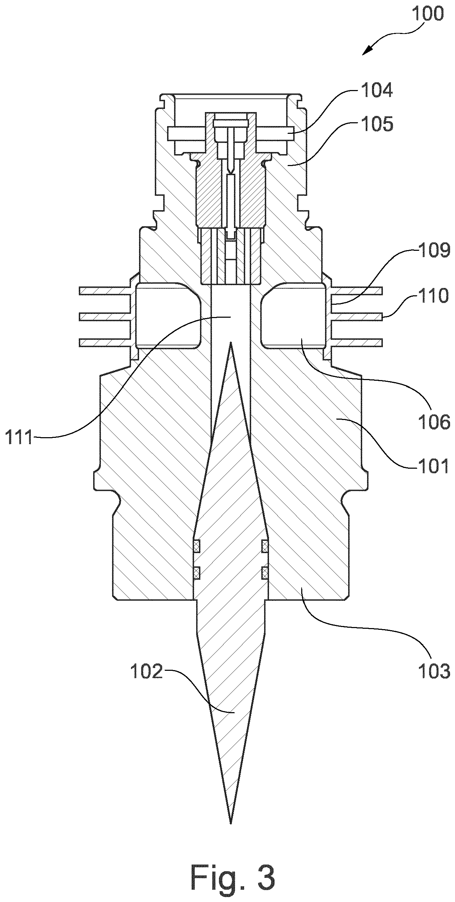

Fig. 3 zeigt eine weitere Ausführungsform des Messgeräts 100 mit ausgedrehten "Taschen" und zusätzlichen Kühlrippen 110, die am Rohr 109 angeordnet sind. Kühlrippen und Rohr können einstückig gefertigt sein.

Bei den in den Figuren 1 bis 3 dargestellten Messgeräten handelt es sich um Füllstandradarmessgeräte mit einem Wellen- oder Hohlleiter 111 zwischen der Antenne, beispielsweise eine Hornantenne (nicht dargestellt), bzw. dem Teil 102 und der Messgerätelektronik 104.

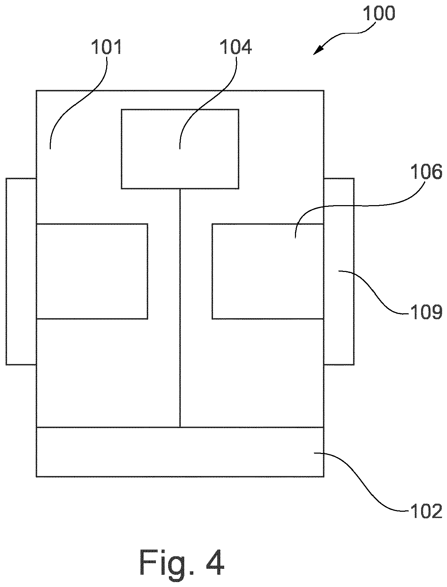

Fig. 4 zeigt eine weitere Ausführungsform der vorliegenden Offenbarung, bei der es sich um ein Druckmessgerät 100 oder ein Durchflussmessgerät handelt. Auch hier befindet sich die Messsonde 102 im oder am vorderen Bereich des Messgerätegehäuses 101 und die Messgeräteelektronik 104 befindet sich im Inneren des Gehäuses im hinteren Bereich. Dazwischen ist die Einschnürung 106 angeordnet, welche durch das Rohr 109 abgedeckt ist.

Das Vorsehen der in den Figuren gezeigten Einschnürung führt zu einer effizienten Wärmeentkopplung, ermöglicht ein Standhalten höherer Temperaturen und eine gleichzeitig kompaktere Ausführung. Aufgrund des Materialabtrags sind verbesserte Schweißverbindungen zwischen Rohr und Messgerätegehäuse möglich.

Damit das Rohr 109 von oben bzw. (aus Sicht des Prozesses) von hinten über das Messgerätegehäuse geschoben werden kann, ist der Durchmesser des Messgerätegehäuses oberhalb der Einschnürung (also in Richtung weg vom Prozess) an keiner Stelle größer als im Bereich neben der Einschnürung, wo das Rohr angeschweißt werden soll.

## Patentansprüche

1. Messgerät (100), eingerichtet zur Prozessautomatisierung im industriellen oder privaten Umfeld, aufweisend:
ein Messgerätegehäuse (101);
eine Messsonde (102), die sich im oder am dem Prozess zugewandten Bereich (103) des Messgerätegehäuses (101) befindet;
eine Messgerätelektronik (104), die sich im Inneren des Messgerätegehäuses (101) im dem Prozess abgewandten Bereich (105) des Messgerätegehäuses (101) befindet;
wobei das Messgerätegehäuse (101) in dem Bereich zwischen der Messsonde (102) und der Messgeräteelektronik (104) eine Einschnürung (106) aufweist, welche den Umfang des Messgerätegehäuses (101) in dem Bereich der Einschnürung (106) reduziert.

2. Messgerät (100) nach Anspruch 1,
wobei die Einschnürung (106) durch einen Drehprozess hergestellt ist.

3. Messgerät (100) nach Anspruch 1 oder 2,
wobei die Einschnürung (106) rotationssymmetrisch ist.

4. Messgerät (100) nach einem der vorhergehenden Ansprüche,
wobei die Einschnürung (106) abgeschrägte Seitenflächen (107, 108) aufweist.

5. Messgerät (100) nach einem der vorhergehenden Ansprüche,
wobei die Querschnittsfläche des Messgerätegehäuses (101) in dem Bereich der Einschnürung (106) weiniger als 10 Prozent der Querschnittsfläche des dem Prozess zugewandten Bereichs (103) des Messgerätegehäuses (101) beträgt.

6. Messgerät (100) nach einem der vorhergehenden Ansprüche,
wobei das Messgerätegehäuse (101) einstückig ist.

7. Messgerät (100) nach einem der vorhergehenden Ansprüche,
wobei der abgewandte Bereich (105) des Messgerätegehäuses (101) dort, wo er an die Einschnürung (106) angrenzt, einen größeren oder den gleichen Umfang aufweist, wie an allen anderen Stellen des abgewandten Bereichs (105).

8. Messgerät (100) nach einem der vorhergehenden Ansprüche,
wobei ein Rohr (109) über die Einschnürung (106) geschoben ist.

9. Messgerät (100) nach Anspruch 8,
wobei das Rohr (109) Kühlrippen (110) aufweist, welche eingerichtet sind, Wärme, die von dem Prozess zugewandten Bereich (103) des Messgerätegehäuses (101) in Richtung des dem Prozess abgewandten Bereichs (105) des Messgerätegehäuses (101) fließt, nach außen abzuleiten.

10. Messgerät (100) nach Anspruch 8 oder 9,
wobei das Rohr (109) an das Messgerätegehäuse (101) angeschweißt ist.

11. Messgerät (100) nach einem der vorhergehenden Ansprüche,
wobei das Messgerät (100) als Füllstandmessgerät ausgeführt ist.

12. Messgerät (100) nach einem der vorhergehenden Ansprüche,
wobei das Messgerät (100) als Druckmessgerät ausgeführt ist.

13. Messgerät (100) nach einem der vorhergehenden Ansprüche,
wobei das Messgerät (100) als Durchflussmessgerät ausgeführt ist.

14. Messgerät (100) nach einem der vorhergehenden Ansprüche,
wobei das Rohr (109) aus demselben Material besteht wie das Messgerätegehäuse (101).

15. Messgerät (100) nach einem der vorhergehenden Ansprüche,
wobei das Rohr (109) and das Messgerätegehäuse (101) aus Metall bestehen.

## Geänderte Patentansprüche

### Geänderte Patentansprüche gemäss Regel 137(2) EPÜ.

1. Messgerät (100), eingerichtet zur Prozessautomatisierung im industriellen oder privaten Umfeld, aufweisend:
ein Messgerätegehäuse (101);
eine Messsonde (102), die sich im oder am dem Prozess zugewandten Bereich (103) des Messgerätegehäuses (101) befindet;
eine Messgerätelektronik (104), die sich im Inneren des Messgerätegehäuses (101) im dem Prozess abgewandten Bereich (105) des Messgerätegehäuses (101) befindet;
wobei das Messgerätegehäuse (101) in dem Bereich zwischen der Messsonde (102) und der Messgeräteelektronik (104) eine Einschnürung (106) aufweist, welche den Umfang des Messgerätegehäuses (101) in dem Bereich der Einschnürung (106) reduziert;
wobei ein Rohr (109) über die Einschnürung (106) geschoben ist.

2. Messgerät (100) nach Anspruch 1,
wobei die Einschnürung (106) durch einen Drehprozess hergestellt ist.

3. Messgerät (100) nach Anspruch 1 oder 2,
wobei die Einschnürung (106) rotationssymmetrisch ist.

4. Messgerät (100) nach einem der vorhergehenden Ansprüche,
wobei die Einschnürung (106) abgeschrägte Seitenflächen (107, 108) aufweist.

5. Messgerät (100) nach einem der vorhergehenden Ansprüche,
wobei die Querschnittsfläche des Messgerätegehäuses (101) in dem Bereich der Einschnürung (106) weniger als 10 Prozent der Querschnittsfläche des dem Prozess zugewandten Bereichs (103) des Messgerätegehäuses (101) beträgt.

6. Messgerät (100) nach einem der vorhergehenden Ansprüche,
wobei das Messgerätegehäuse (101) einstückig ist.

7. Messgerät (100) nach einem der vorhergehenden Ansprüche,
wobei der abgewandte Bereich (105) des Messgerätegehäuses (101) dort, wo er an die Einschnürung (106) angrenzt, einen größeren oder den gleichen Umfang aufweist, wie an allen anderen Stellen des abgewandten Bereichs (105).

8. Messgerät (100) nach einem der vorhergehenden Ansprüche,
wobei das Rohr (109) Kühlrippen (110) aufweist, welche eingerichtet sind, Wärme, die von dem Prozess zugewandten Bereich (103) des Messgerätegehäuses (101) in Richtung des dem Prozess abgewandten Bereichs (105) des Messgerätegehäuses (101) fließt, nach außen abzuleiten.

9. Messgerät (100) nach einem der vorhergehenden Ansprüche,
wobei das Rohr (109) an das Messgerätegehäuse (101) angeschweißt ist.

10. Messgerät (100) nach einem der vorhergehenden Ansprüche,
wobei das Messgerät (100) als Füllstandmessgerät ausgeführt ist.

11. Messgerät (100) nach einem der vorhergehenden Ansprüche,
wobei das Messgerät (100) als Druckmessgerät ausgeführt ist.

12. Messgerät (100) nach einem der vorhergehenden Ansprüche,
wobei das Messgerät (100) als Durchflussmessgerät ausgeführt ist.

13. Messgerät (100) nach einem der vorhergehenden Ansprüche,
wobei das Rohr (109) aus demselben Material besteht wie das Messgerätegehäuse (101).

14. Messgerät (100) nach einem der vorhergehenden Ansprüche,
wobei das Rohr (109) and das Messgerätegehäuse (101) aus Metall bestehen.
